# EUROPEAN PATENT APPLICATION

(11) **EP 2 717 348 A1**
(43) Date of publication of application: **09.04.2014**
(21) Application number: 11866714.6
(22) Date of filing: 13.07.2011
(51) Int. Cl.: H01M 2/10, H01M 2/20

(54) **BUS BAR CASE, ELECTRIC STORAGE DEVICE, AND VEHICLE**

(30) Priority: 03.06.2011 JP 2011124886
(71) Applicant: Toyota Jidosha Kabushiki Kaisha, Toyota-shi, Aichi 471-8571 (JP)
(72) Inventor: KOSAKI, Akihiro, Toyota-shi Aichi 471-8571 (JP); IIDA, Kenji, Toyota-shi Aichi 471-8571 (JP)
(74) Representative: Intès, Didier Gérard André
(86) International application number: PCT/JP2011/004008
(87) International publication number: WO 2012/164635

(57) **Abstract**

[PROBLEM] It is an object of the present invention to provide a technique capable of responding adaptively to a change in the flow path shape of an exhaust gas flow path and of tightly fixing an exhaust gas hose to an assembled battery.

[SOLVING MEANS] A bus bar case includes a bus bar holding portion 101a, 101b unifying and holding a plurality of bus bars 2 for electrically connecting adjacent cells of a plurality of cells 601 arranged in a predetermined direction, each of the cells having a gas discharge valve, and a hose holding portion 102 provided integrally with the bus bar holding portion 101a, 101b and holding an exhaust gas hose 3 for directing gas discharged through the gas discharge valve in the predetermined direction, the gas discharge valve being provided for each of the plurality of cells 601.

## Description

### TECHNICAL FIELD

The present invention relates to an electric storage apparatus including a plurality of cells arranged in order.

### BACKGROUND ART

A known electric storage apparatus for vehicle is an assembled battery including a plurality of cells connected electrically in series through a bus bar. The cell contains an electrolytic solution. When an abnormality occurs in the battery, the electrolytic solution is changed into gas to increase the internal pressure of the cell. To address this, the cell is provided with a gas discharge valve for discharging such gas.

The gas discharged through the gas discharge valve is directed to a predetermined space via an exhaust gas hose. The exhaust gas hose is fixed to a battery module, for example by providing the battery module with an engagement portion for preventing the detachment of the exhaust gas hose and engaging the engagement portion with a portion to be engaged formed on the exhaust gas hose.

Each of Patent Documents 1 and 2 has disclosed a technique for integrally molding a bus bar case and an exhaust gas duct which forms an exhaust gas flow path.

### PRIOR ART DOCUMENTS

### PATENT DOCUMENTS

[Patent Document 1] Japanese Patent Laid-Open No. 2002-134078
[Patent Document 2] Japanese Patent Laid-Open No. 2010-205509

### DISCLOSURE OF THE INVENTION

### PROBLEMS TO BE SOLVED BY THE INVENTION

In the related art described above, however, the bus bar case and a portion of the exhaust gas flow path are inseparably integrated, and for example, changing the flow path shape of the exhaust gas flow path creates a problem of requiring the redesign of a member consisting of the bus bar case integral with a portion of a new exhaust gas flow path.

It is thus an object of the present invention to provide a technique capable of responding adaptively to a change in the flow path shape of an exhaust gas flow path and of tightly fixing an exhaust gas hose to an assembled battery.

### MEANS FOR SOLVING THE PROBLEMS

To solve the problem, the present invention provides
(1) a bus bar case including a bus bar holding portion unifying and holding a plurality of bus bars for electrically connecting adjacent cells of a plurality of cells arranged in a predetermined direction, each of the cells having a gas discharge valve, and a hose holding portion provided integrally with the bus bar holding portion and holding an exhaust gas hose for directing gas discharged through the gas discharge valve in the predetermined direction, the gas discharge valve being provided for each of the plurality of cells.
(2) In the configuration of (1), the hose holding portion can have a recess portion forming a space for passing the exhaust gas hose between the hose holding portion and an upper face of the cell when the plurality of bus bars held by the bus bar holding portion are fixed to the plurality of cells. With the configuration of (2), the recess portion can hold the exhaust gas hose to surround a portion of a side thereof and can sandwich the hose between the hose holding portion and the upper face of the cell, and also, can prevent the exhaust gas hose from sliding sideways and moving on the upper face of the cell.
(3) In the configuration of (1), each of the plurality of cells may include the gas discharge valve at a central position on an upper end face in the direction orthogonal to the predetermined direction and includes an electrode on each side of the gas discharge valve on the upper end face in the direction orthogonal to the predetermined direction, the bus bar holding portion may include a first bus bar holding portion holding a plurality of first bus bars connecting ones of the electrodes of the plurality of cells closer to one end in the direction orthogonal to the predetermined direction, and a second bus bar holding portion holding a plurality of second bus bars connecting the others of the electrodes of the plurality of cells closer to the other end in the direction orthogonal to the predetermined direction, and the hose holding portion may have an arch portion connecting the first bus bar holding portion to the second bus bar holding portion across the gas discharge valve. With the configuration of (3), the arc portion connecting the first bus bar holding portion to the second bus bar holding portion can achieve the function of maintaining the positional relationship between the first bus bar holding portion and the second bus bar holding portion and the function of fixing the exhaust gas hose to the upper face of the cell.
(4) In the configuration of (3), the gas hose is placed to direct gas in a discharge direction from one of the cells disposed closer to one end in the predetermined direction toward one of the cells disposed closer to the other end, and a plurality of the arch portions are arranged in the predetermined direction, and preferably, the number of the arch portions disposed downstream of a central position of the plurality of cells in the discharge direction is larger than the number of the arch portions disposed upstream of the central position of the plurality of cells in the discharge direction.
(5) In the configuration of (1) to (4), each of the plurality of cells is one of a lithium-ion battery and a nickel metal hydride battery.
(6) An electric storage apparatus according to the present invention includes the bus bar case of any one of (1) to (5), a plurality of bus bars held by the bus bar holding portion of the bus bar case, an exhaust gas hose held on the upper end faces of the plurality of cells by the hose holding portion, and a plurality of cells connected to the bus bar.
(7) A vehicle according to the present invention preferably has the electric storage apparatus of the configuration of (6) mounted thereon.

### ADVANTAGE OF THE INVENTION

According to the present invention, a change in the flow path shape of the exhaust gas flow path can be adaptively responded to and the exhaust gas hose can be tightly fixed to the assembled battery.

### BRIEF DESCRIPTION OF THE DRAWINGS

[Fig. 1] An exploded perspective view of an electric storage apparatus.
[Fig. 2] A plan view of an assembled battery on which a bus bar module is mounted, viewed from above.
[Fig. 3] A section view taken along line A-A in Fig. 2.
[Fig. 4] A schematic perspective view showing a plurality of electric storage apparatuses placed in combination for mounting on a vehicle.

### MODE FOR CARRYING OUT THE INVENTION

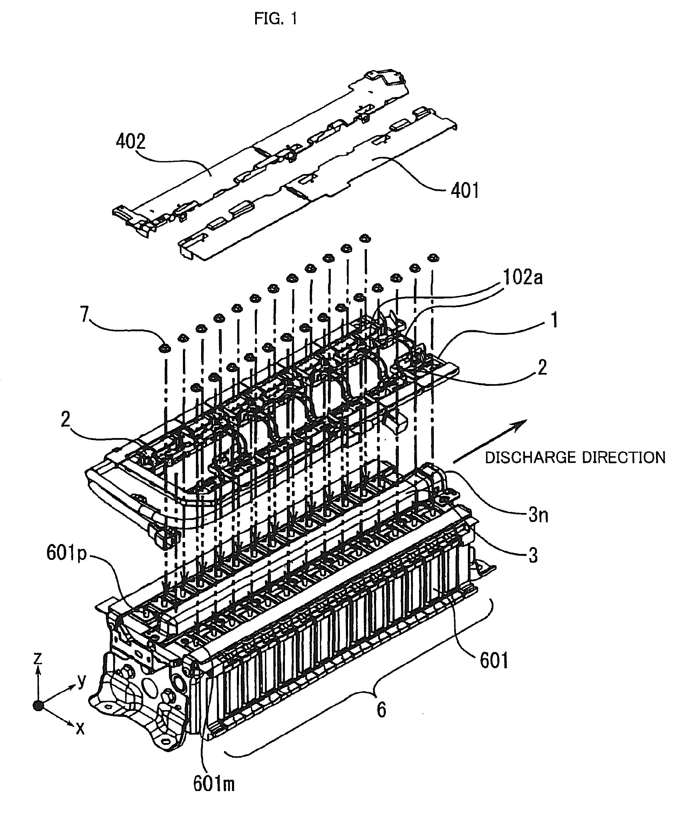

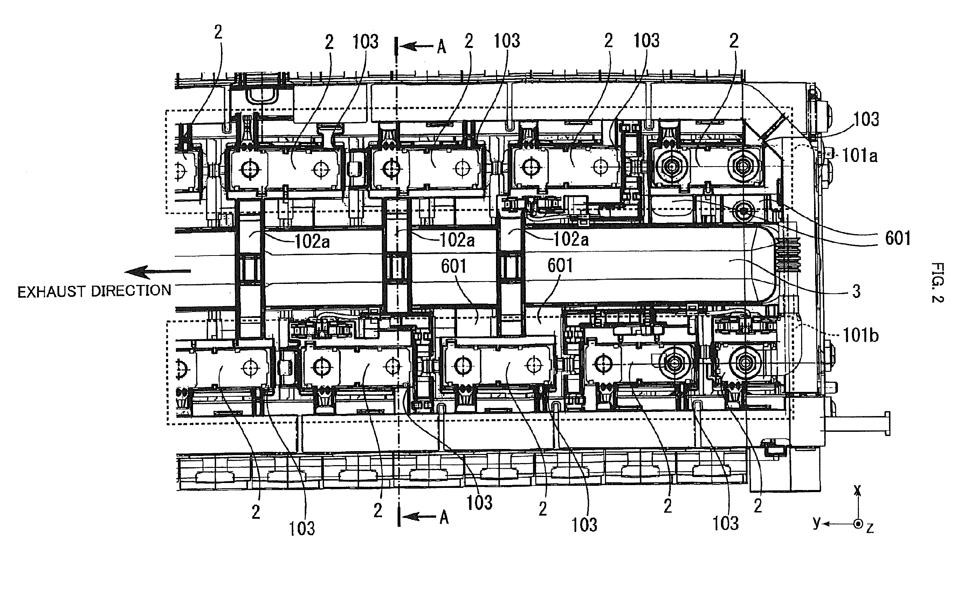

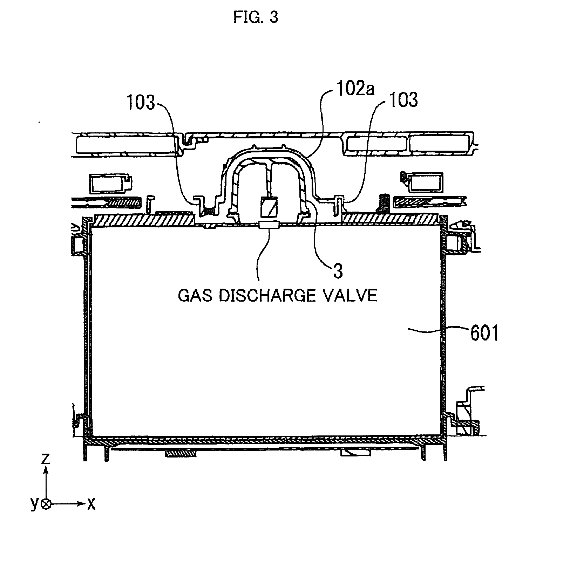

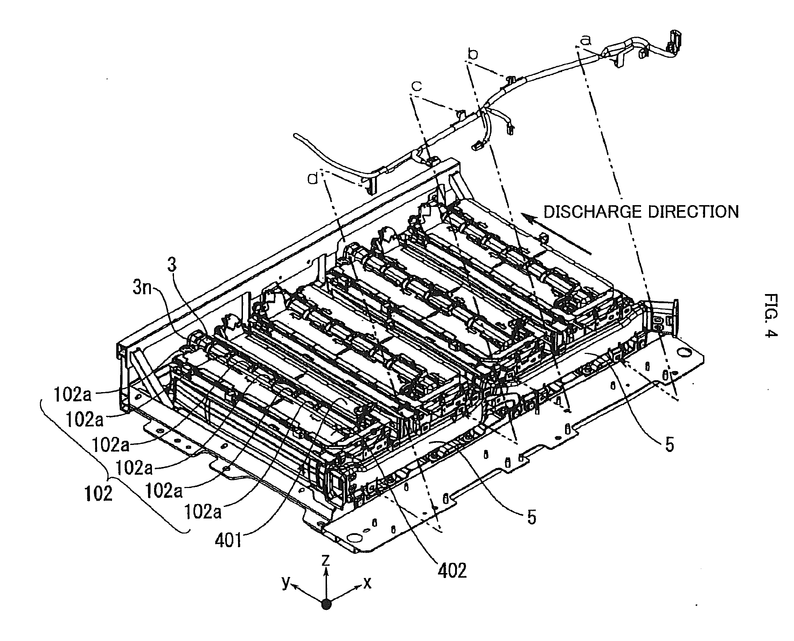

Referring to Fig. 1, an electric storage apparatus including a bus bar case according to the present embodiment will be described. Fig. 1 is an exploded perspective view of the electric storage apparatus. Fig. 2 is a plan view of an assembled battery on which a bus bar module is mounted, viewed from above. Fig. 3 is a section view taken along line A-A in Fig. 2. Fig. 4 is a schematic perspective view showing a plurality of electric storage apparatuses placed in combination for mounting on a vehicle. An X axis, a Y axis, and a Z axis are three axes orthogonal to each other, and the Y axis corresponds to the direction in which cells are stacked (predetermined direction) and the direction in which exhaust gas is discharged.

The electric storage apparatus according to the present embodiment can be mounted on a vehicle, and examples of the vehicle include a hybrid car and an electric car. The hybrid car is a vehicle which includes not only the electric storage apparatus but also an internal-combustion engine or a fuel cell as the power source generating the running energy (kinetic energy) for the vehicle. The electric car is a vehicle which runs only with the output from the electric storage apparatus.

The electric storage apparatus has the assembled battery 6 including a plurality of cells 601 connected electrically in series. The plurality of cells 601 are arranged (stacked) in the Y axis direction shown in Fig. 1. A spacer (not shown) is disposed between two adjacent cells 601 of the plurality of cells. The spacer forms a space between two adjacent cells 601 for moving air or the like used in adjusting the temperature of the cell 601.

A secondary battery such as a nickel metal hydride battery or a lithium-ion battery can be used as the cell 601. An electric double layer capacitor may be used instead of the secondary battery. The number of the cells 601 constituting the assembled battery 6 can be set as appropriate based on the output performance required of the assembled battery 6.

An end plate, not shown, is located at each end of the assembled battery 6 in the Y axis direction. These end plates are coupled by a restraint band, not shown, and are pressed by the restraint band in the directions in which they are brought closer to each other. This can maintain the battery performance of the assembled battery 6.

For example, the cell 601 is a lithium-ion battery including a power-generating element, not shown, housed in a square-type battery case. The power-generating element is housed in a rolled-up state within the battery case. The power-generating element is formed of a positive electrode element, a negative electrode element, and a separator placed between the positive electrode element and the negative electrode element. The positive electrode element is formed of a collector and a positive electrode layer formed on a surface of the collector. The positive electrode layer refers to a layer containing an active material, a conductive agent and the like appropriate for the positive electrode. A lithium-transition metal composite oxide can be used as the active material for the positive electrode layer. The negative electrode element is formed of a collector and a negative electrode layer formed on a surface of the collector. The negative electrode layer refers to a layer containing an active material, a conductive agent and the like appropriate for the negative electrode. Carbon can be used as the active material for the negative electrode layer. Acetylene black, carbon black, graphite, carbon fiber, and carbon nanotube can be used as the conductive agent.

A protruding positive electrode terminal 601p and a protruding negative electrode terminal 601m are provided on an upper end face of the case of the cell 601. The positive electrode terminal 601p and the negative electrode terminal 601m are disposed side by side in the X axis direction. The adjacent cells 601 in the Y axis direction have the positive electrode terminals 601p and the negative electrode terminals 601m oriented opposite to each other. Specifically, the positive electrode terminal 601p of one cell 601 and the negative electrode terminal 601m of the other cell 601 are opposed to each other in the Y axis direction and are connected electrically and mechanically through a bus bar 2.

A gas discharge valve is formed between the positive electrode terminal 601p and the negative electrode terminal 601m (at a generally central position on the upper end face in the direction orthogonal to the predetermined direction). The gas discharge valve is a break-type valve. The gas discharge valve is broken when the internal pressure of the battery case is increased by gas produced in overcharge or the like. This can suppress an increase in internal pressure of the cell 601.

An exhaust gas hose 3 for directing the gas discharged through the gas discharge valve to a predetermined space is placed on upper end faces of the plurality of cells 601 stacked in the Y axis direction. The exhaust gas hose 3 is a member extending in the Y axis direction and is provided with an opening at least in its lower portion in the Z axis direction at the position associated with the gas discharge valve. An end portion of the exhaust gas hose 3 in the Y axis direction closer to the predetermined space for discharging the gas (downstream in the gas discharge direction) serves as an exhaust nozzle 3n formed in a fanned nozzle shape.

A portion of the bus bar case 1 that holds the bus bar 2 is covered with and protected by a cover 401 and a cover 402 (see Fig. 1).

Next, the bus bar case 1 is described in detail.

The bus bar case 1 can be made, for example of an insulating resin, and includes a first bus bar holding portion 101a, a second bus bar holding portion 101b, and a plurality of hose holding portions 102. The first bus bar holding portion 101a and the second bus bar holding portion 101b constitute a bus bar holding portion.

The bus bar holding portion unifies and holds the plurality of bus bars 2 for electrically connecting adjacent ones of the plurality of cells 601 arranged in the predetermined direction (Y direction) and having the respective gas discharge valves.

The hose holding portion 102 is provided integrally with the first bus bar holding portion 101a and the second bus bar holding portion 101b and holds the exhaust gas hose 103 such that the exhaust gas hose 103 is not detached from the upper end face of the cell 601.

Specifically, the hose holding portion 102 has a recess portion (see Fig. 3) forming a space for passing the exhaust gas hose 3 between the hose holding portion 102 and the upper face of the cell 601 when the plurality of bus bars 2 held by the bus bar holding portion are fixed to the plurality of cells 601.

The first bus bar holding portion 101a holds the plurality of bus bars 2 (first bus bars) connecting the plurality of electrodes of the plurality of cells 601 closer to one side in the direction (X axis direction) perpendicular to the predetermined direction (Y axis direction).

The second bus bar holding portion 101b holds the plurality of bus bars 2 (second bus bars) connecting the plurality of electrodes of the plurality of cells 601 closer to the other side in the direction (X axis direction) perpendicular to the predetermined direction (Y axis direction).

The hose holding portion 102 has a plurality of arch portions 102a connecting the first bus bar holding portion 101a to the second bus bar holding portion 101b across the gas discharge valve.

Although the arch portion 102a is shaped to continuously connect the first bus bar holding portion 101a and the second bus bar holding portion 101b, the present invention is not limited thereto. For example, the arch portion 102a may not be formed to continue from the first bus bar holding portion 101a to the second bus bar holding portion 101b but be formed to interrupt at some midpoint. In other words, the shape of the arch portion 102a is not limited as long as the hose can be held on the assembled battery 6.

The gas hose 3 is placed to direct the gas in a discharge direction from the cell 601 disposed closer to one end in the predetermined direction (Y axis direction) toward the cell 601 disposed closer to the other end.

The hose holding portion 102 includes the plurality of the arch portions 102a arranged in the predetermined direction (Y axis direction) such that the number of the arch portions 102a disposed downstream of the central position of the plurality of cells 601 in the discharge direction is larger than the number of the arch portions 102a disposed upstream of the central position of the plurality of cells 601 (assembled battery 6) in the discharge direction (see Fig. 1 and Fig. 4).

Each of the positive electrode terminal 601p and the negative electrode terminal 601m has a screw groove in its outer face. A nut member 7 is tightened to each of the positive electrode terminal 601p and the negative electrode terminal 601m. This fixes the bus bar case 1 to the assembled battery 6.

Since a portion of the bus bar case 1 fixes the exhaust gas hose 3 to the assembled battery 6, no engagement portion for holding the exhaust gas hose 3 is needed in the exhaust gas hose 3 or the assembled battery 6. This can reduce the number of parts and the cost.

The bus bar case 1 made of the resin can enhance the flexibility in the shape of the bus bar case 1. With this configuration, the exhaust gas hose 3 can be held without compromising the essential function of the bus bar case 1 of unifying the plurality of bus bars 2.

Since the bus bar case 1 is attached onto the upper end face of the assembled battery 6 on which the positive electrode terminal 601p and the negative electrode terminal 601m of the cell 601 and the gas discharge valve are located, the attachment process can be simplified.

While the present embodiment has been described in conjunction with the cell 601 of a so-called box type on which the bus bar module is mounted, the present invention is not limited thereto. For example, a plurality of cells of cylindrical shape in electrical connection to each other may be formed into a package, and the packaged cells may be placed similarly to the cells 601.

### DESCRIPTION OF THE REFERENCE NUMERALS

1: BUS BAR CASE, 101a: BUS BAR HOLDING PORTION (FIRST BUS BAR HOLDING PORTION), 101b: BUS BAR HOLDING PORTION (SECOND BUS BAR HOLDING PORTION), 2: BUS BAR, 3: EXHAUST GAS HOSE, 6: ASSEMBLED BATTERY, 601: CELL

## Claims

1. A bus bar case comprising:
a bus bar holding portion unifying and holding a plurality of bus bars for electrically connecting adjacent cells of a plurality of cells arranged in a predetermined direction, each of the cells having a gas discharge valve; and
a hose holding portion provided integrally with the bus bar holding portion and holding an exhaust gas hose for directing gas discharged through the gas discharge valve in the predetermined direction, the gas discharge valve being provided for each of the plurality of cells.

2. The bus bar case according to claim 1, wherein the hose holding portion has a recess portion forming a space for passing the exhaust gas hose between the hose holding portion and an upper face of the cell when the plurality of bus bars held by the bus bar holding portion are fixed to the plurality of cells.

3. The bus bar case according to claim 1, wherein each of the plurality of cells includes the gas discharge valve at a central position on an upper end face in a direction orthogonal to the predetermined direction and includes an electrode on each side of the gas discharge valve on the upper end face in the direction orthogonal to the predetermined direction,
wherein the bus bar holding portion includes a first bus bar holding portion holding a plurality of first bus bars connecting ones of the electrodes of the plurality of cells closer to one end in the direction orthogonal to the predetermined direction, and a second bus bar holding portion holding a plurality of second bus bars connecting the others of the electrodes of the plurality of cells closer to the other end in the direction orthogonal to the predetermined direction, and
wherein the hose holding portion has an arch portion connecting the first bus bar holding portion to the second bus bar holding portion across the gas discharge valve.

4. The bus bar case according to claim 3, wherein the gas hose is placed to direct gas in a discharge direction from one of the cells disposed closer to one end in the predetermined direction toward one of the cells disposed closer to the other end, and
wherein a plurality of the arch portions are arranged in the predetermined direction, and the number of the arch portions disposed downstream of a central position of the plurality of cells in the discharge direction is larger than the number of the arch portions disposed upstream of the central position of the plurality of cells in the discharge direction.

5. The bus bar case according to any one of claims 1 to 4, wherein each of the plurality of cells is one of a lithium-ion battery and a nickel metal hydride battery.

6. An electric storage apparatus comprising:
the bus bar case according to any one of claims 1 to 5;
a plurality of bus bars held by the bus bar holding portion of the bus bar case;
an exhaust gas hose held on the upper end faces of the plurality of cells by the hose holding portion; and
a plurality of cells connected to the bus bar.

7. A vehicle on which the electric storage apparatus according to claim 6 is mounted.
